(19) Europäisches Patentamt
European Patent Office
Office européen des brevets

(11) **EP 2 998 768 A1**

(12) **EUROPEAN PATENT APPLICATION**

(43) Date of publication:
23.03.2016 Bulletin 2016/12

(51) Int Cl.:
*G02B 5/02* *(2006.01)*

(21) Application number: 15185846.1

(22) Date of filing: 18.09.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.09.2014 JP 2014191174**

(71) Applicant: **NGK Insulators, Ltd.**
**Nagoya-shi, Aichi 467-8530 (JP)**

(72) Inventor: **SHIBATA, Kazuyoshi**
**Nagoya-city, Aichi 467-8530 (JP)**

(74) Representative: **TBK**
**Bavariaring 4-6**
**80336 München (DE)**

(54) **OPTICAL COMPONENT**

(57) An optical component (10) contains a translucent substrate (12) and a glass layer (14) disposed in contact with the translucent substrate (12). The glass layer (14) has a refractive index equal to or less than that of the translucent substrate (12).

# FIG. 1A

<u>10</u>

16 (n)
14 (nb)
12 (na)

EP 2 998 768 A1

FIG. 1B

**Description**

BACKGROUND OF THE INVENTION

Field of the Invention:

The present invention relates to an optical component suitable for use, for example, in a diffuser plate or a fluorescent diffuser plate for a solid-state light source such as an LED (light-emitting diode) or an LD (laser diode), a support substrate in a surface plate or the like for supporting a material to be subjected to a surface treatment such as a grinding or polishing treatment, a wheel for a projector, etc.

Description of the Related Art:

In general, the transmittance of a translucent substrate of an optical component can be improved, for example, by mirror-finishing a surface of the translucent substrate to reduce the reflectance. Meanwhile, in the case of forming a dichroic film or an AR (antireflection) film on the translucent substrate, a surface of the translucent substrate is mirror-finished in advance, and the dichroic film or the AR film is formed on the mirror surface (see Japanese Laid-Open Patent Publication Nos. 10-311907 and 2006-312579, for example). The surface of the translucent substrate can be mirror-finished by using a polishing process as described in Japanese Laid-Open Patent Publication Nos. 10-311907 and 2006-312579, etc.

SUMMARY OF THE INVENTION

However, after performing the polishing process, a material such as an abrasive material may remain on the translucent substrate, and a defect may be generated in the dichroic film or the AR film due to the remaining material. In addition, disadvantageously, the polishing process contains a complicated operation to increase the production cost.
In view of the above problems, an object of the present invention is to provide an optical component having the following advantageous effects:

(a) a mirror surface can be formed without polishing processes;
(b) the surface can be made suitable for easily forming a dichroic film, an AR film, or the like without cost increase; and
(c) the reflectance can be reduced at a boundary with air or with a material having a different refractive index to thereby improve the transmittance.

[1] An optical component according to the present invention contains a translucent substrate and a glass layer, wherein the glass layer is disposed in contact with the translucent substrate and has a refractive index equal to or less than that of the translucent substrate.
[2] In the present invention, it is preferred that the glass layer have a surface roughness smaller than that of the translucent substrate.
[3] In the present invention, it is preferred that the translucent substrate contain alumina as a main component.
[4] In the present invention, it is preferred that the translucent substrate have a thickness of 5 mm or less and the glass layer has a thickness of 0.1 mm or less.
[5] In the present invention, the optical component may further contain a dichroic film formed on the glass layer.
[6] In the present invention, the optical component may further contain an antireflection film formed on the glass layer.
[7] In the present invention, the glass layer may be formed on each of both surfaces of the translucent substrate.
[8] In the present invention, the translucent substrate may contain a fluorescent layer.
[9] In this case, the glass layer preferably should be formed on the fluorescent layer.
[10] In the present invention, the translucent substrate may have a lens shape on a surface thereof.
[11] In this case, the optical component may further contain a reflection film formed on a back surface of the translucent substrate.
[12] Alternatively, the optical component may further contain a reflection film formed on a back surface of the translucent substrate, the glass layer being interposed between the reflection film and the translucent substrate.

The optical component of the present invention has the following advantageous effects:

(a) a mirror surface can be formed without polishing processes;
(b) the surface can be made suitable for easily forming a dichroic film, an AR film, or the like without cost increase; and
(c) the reflectance can be reduced at a boundary with air or with a material having a different refractive index to thereby improve the transmittance.

The above and other objects, features and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1A is a cross-sectional view of an optical component according to an embodiment of the present invention;
FIG. 1B is an enlarged view of the optical component;
FIG. 2A is a cross-sectional view of an optical component used in a first experiment example;
FIG. 2B is a laser microscope image of a surface of the optical component;
FIG. 2C is a profile curve of a cross-section taken along a dashed-dotted line La shown in FIG. 2B;
FIG. 3A is a cross-sectional view of a ceramic substrate used in the first experiment example;
FIG. 3B is a laser microscope image of a surface of the ceramic substrate;
FIG. 3C is a profile curve of a cross-section taken along a dashed-dotted line La shown in FIG. 3B;
FIG. 4A is an explanatory view for illustrating a transmittance change by a process of polishing a surface (as-fired surface) of the ceramic substrate to form a mirror surface;
FIG. 4B is an explanatory view for illustrating a transmittance change by a process of forming a glass layer on the surface (mirror surface) of the ceramic substrate;
FIG. 4C is an explanatory view for illustrating a transmittance change by a process of forming a glass layer on the surface (as-fired surface) of the ceramic substrate;
FIG. 4D is an explanatory view for illustrating a transmittance change by a process of forming first and second glass layers on the surface (as-fired surface) of the ceramic substrate;
FIG. 5A is a cross-sectional view of a first optical component;
FIG. 5B is a cross-sectional view of a second optical component;
FIG. 5C is a cross-sectional view of a third optical component;
FIG. 5D is a cross-sectional view of a fourth optical component;
FIG. 6A is a cross-sectional view of a fifth optical component;
FIG. 6B is a cross-sectional view of an optical component according to a modification example of the fifth optical component;
FIG. 6C is a cross-sectional view of an optical component according to another modification example of the fifth optical component;
FIG. 6D is a cross-sectional view of an optical component according to a further modification example of the fifth optical component;
FIG. 7A is a cross-sectional view of a sixth optical component;
FIG. 7B is a cross-sectional view of a seventh optical component;
FIG. 7C is a cross-sectional view of an eighth optical component;
FIG. 8 is an explanatory view for illustrating a method for evaluating a front transmittance;
FIG. 9A is an explanatory view for illustrating Comparative Example 2;
FIG. 9B is an explanatory view for illustrating Example 5;
FIG. 9C is an explanatory view for illustrating Example 6; and
FIG. 10 is a graph showing transmittance changes with light wavelength in Examples 5 and 6 and Comparative Example 2.

DESCRIPTION OF THE PREFERRED EMBODIMENTS

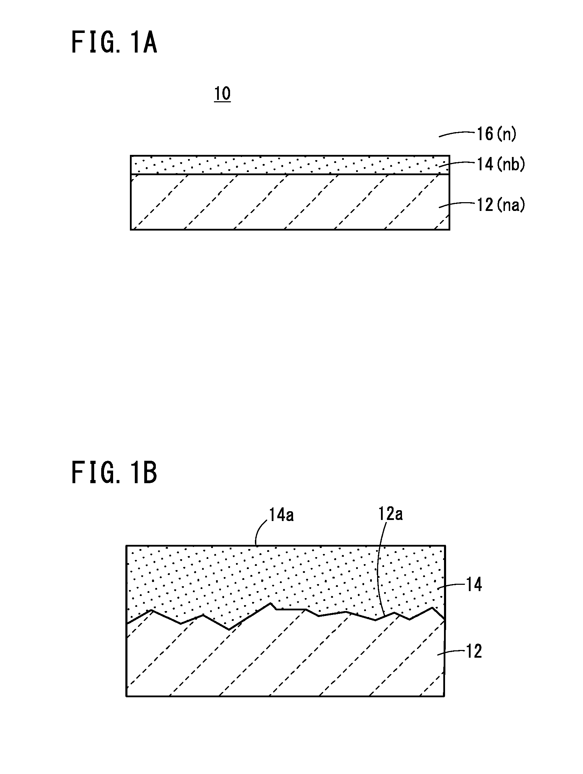

Several embodiment examples of the optical component of the present invention will be described below with reference to FIGS. 1A to 10. In this description, a numeric range of "A to B" includes both the numeric values A and B as the lower limit and upper limit values.

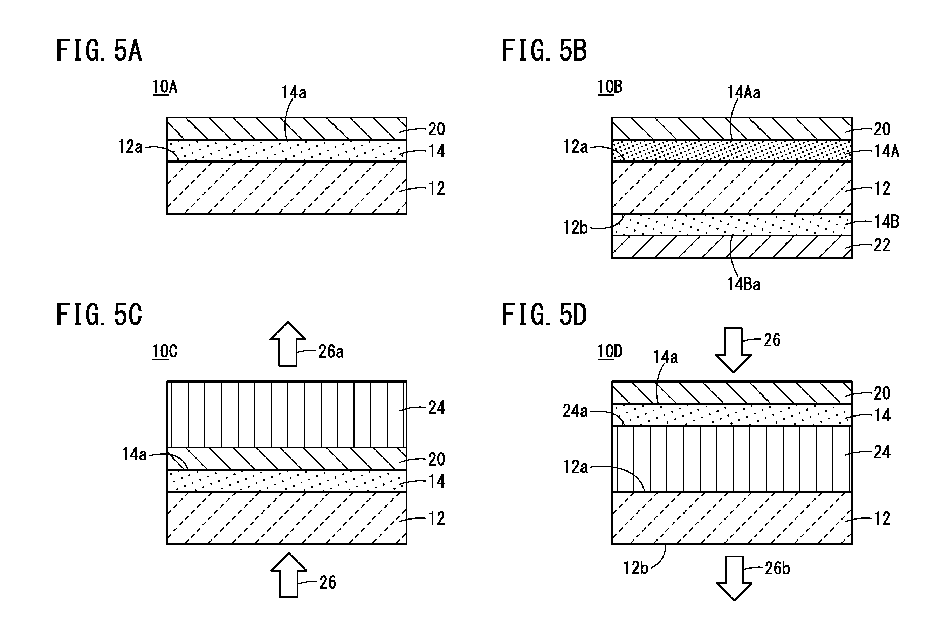

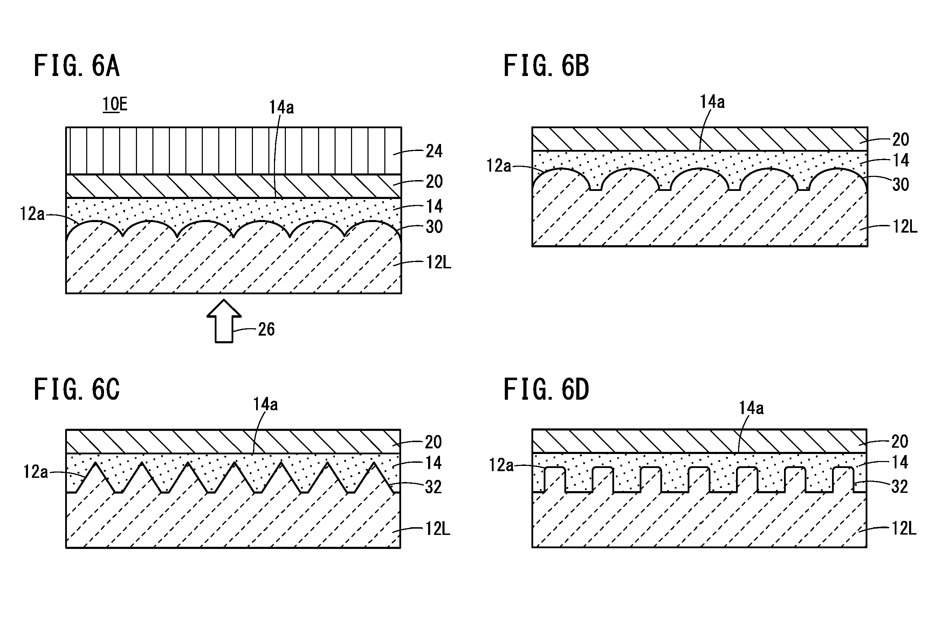

As shown in FIG. 1A, an optical component 10 according to an embodiment of the present invention has a translucent ceramic substrate 12, and further has a glass layer 14 disposed in contact with the ceramic substrate 12. The refractive index na of the ceramic substrate 12, the refractive index nb of the glass layer 14, and the refractive index n of an air layer 16 satisfy the relation of $na \geq nb > n$, preferably satisfy the relation of $na > nb > n$. In the present invention, translucent substrates include the ceramic substrate 12, and further include a fluorescent layer 24 (see FIG. 5C) and a ceramic substrate 12L having a lens (see FIG. 6A), to be hereinafter described.

As shown in FIG. 1B, the surface roughness of the glass layer 14 is smaller than that of the ceramic substrate 12. Thus, e.g., by forming the glass layer 14 on a surface 12a of the ceramic substrate 12, the surface roughness of the optical component 10 can be smaller than that of the surface 12a.

The ceramic substrate 12 is a substrate made of a translucent ceramic material. For example, the thickness of the ceramic substrate 12 is preferably 0.01 to 5 mm, more preferably 0.01 to 2 mm. The ceramic substrate 12 preferably has only a small number of pores. For example, the ceramic substrate 12 preferably contains 1 to 1000 ppm of pores by volume. A small number of the pores can act to improve light diffusion in the ceramic substrate 12 though the pores have an adverse effect on the light transmittance of the ceramic substrate 12. The translucent ceramic material is not particularly limited, and may be alumina, aluminum nitride, spinel, PLZT (lanthanum-doped lead zirconate titanate), YAG, $Si_3N_4$, quartz, sapphire, AlON, hard glass such as Pyrex (registered trademark), etc. The translucent ceramic material is preferably a translucent alumina material containing alumina as a main component. Specifically, the alumina content of the translucent ceramic material is preferably 90% or more, more preferably 99% or more. In this case, for example, the ceramic substrate 12 has a refractive index of about 1.73 to 1.77 and a thermal expansion coefficient of about $6 \times 10^{-6}$ /K. The translucent alumina crystals preferably have an average grain diameter of 0.5 to 50 $\mu$m. For example, the average grain diameter can be measured as follows. An arbitrary portion of a sample is observed at 200-fold magnification using an optical microscope. The number N of crystals located on a 0.7-mm line segment in an observed image is counted. The average grain diameter can be calculated using the formula of:

$$0.7 \times (4/\pi) / N.$$

The glass layer 14 may be formed by a fusion method, a vapor phase method (such as a PVD or CVD method), a sol-gel method, etc. For example, by using the fusion method, a surface 14a of the glass layer 14 can be formed as a mirror surface (flat surface) as shown in FIG. 1B. Thus, the glass layer 14 can be formed on the ceramic substrate 12 by shaping a paste containing a glass on the ceramic substrate 12 and by firing the paste at a temperature equal to or higher than the softening point of the glass. The step of shaping the paste may be appropriately carried out using a printing method, a coating method, a brush method, a spray method, etc. A suspension, a solution, a slurry, or the like containing a glass or an oxide powder that can be turned into a glass by firing may be appropriately used instead of the paste. The thickness of the glass layer 14 is preferably 0.01 to 0.1 mm.

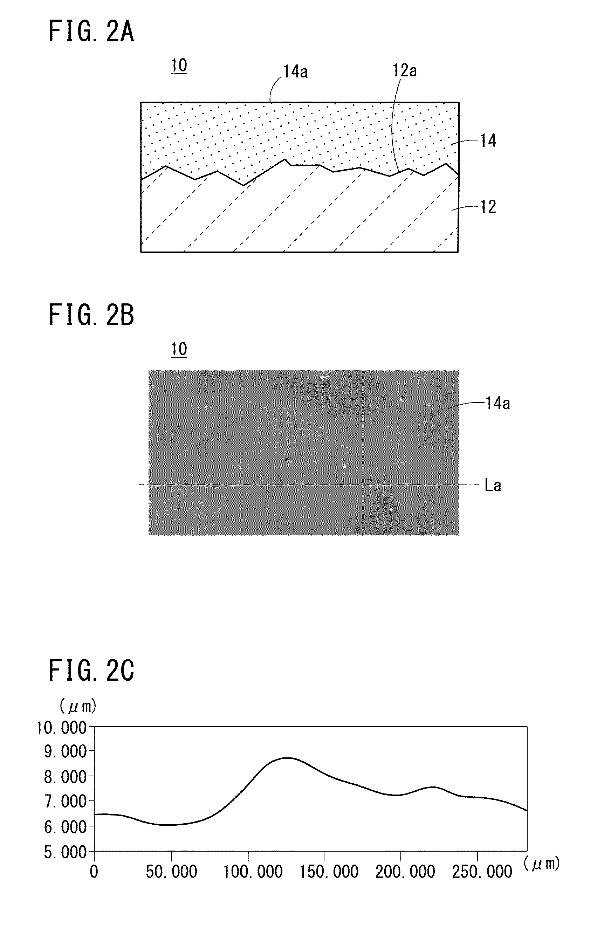

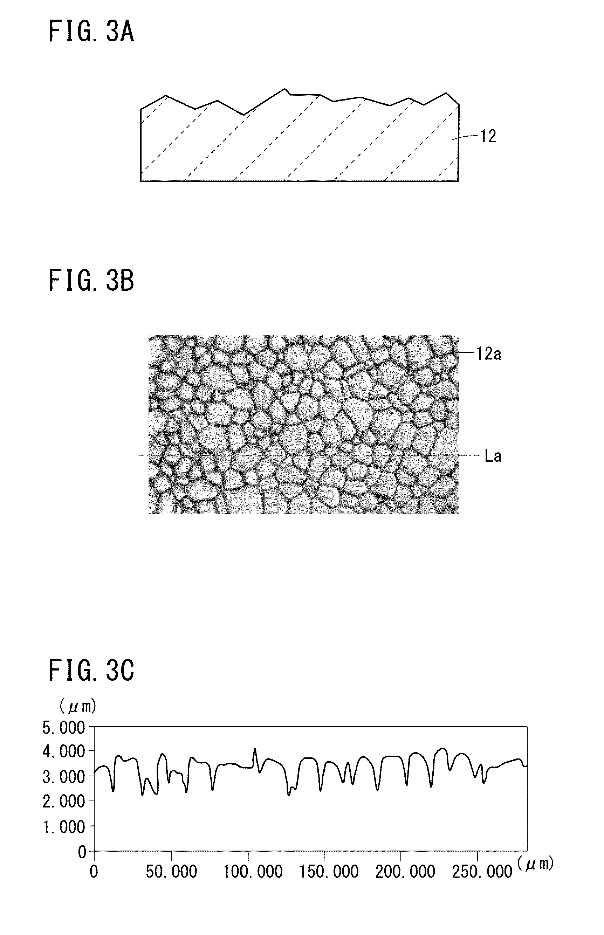

An experiment example will be described below. In this experiment example, as shown in FIG. 2A, the glass layer 14 was formed by the fusion method on the surface 12a of the normal ceramic substrate 12, which was a translucent alumina substrate in this example. As shown in FIGS. 3A to 3C, the surface 12a of the ceramic substrate 12 had an average grain diameter of 20 $\mu$m and a surface roughness Ra of 0.2 $\mu$m. FIG. 3A is a schematic cross-sectional view of the ceramic substrate 12, FIG. 3B is a laser microscope image of the surface 12a of the ceramic substrate 12, and FIG. 3C is a profile curve of the cross-section taken along a dashed-dotted line La shown in FIG. 3B.

As shown in FIG. 2A, the glass layer 14, which had a composition mainly containing $SiO_2$-$B_2O_3$, was formed on the surface 12a of the ceramic substrate 12 at a temperature of 900°C over 10 minutes. As shown in FIGS. 2B and 2C, the glass layer 14 had a mirror surface having a surface roughness Ra of 0.05 $\mu$m. FIG. 2B is a laser microscope image of the surface 14a of the glass layer 14, and FIG. 2C is a profile curve of the cross-section taken along a dashed-dotted line La shown in FIG. 2B. As described above, the surface roughness was improved by forming the glass layer 14 on the surface 12a of the ceramic substrate 12.

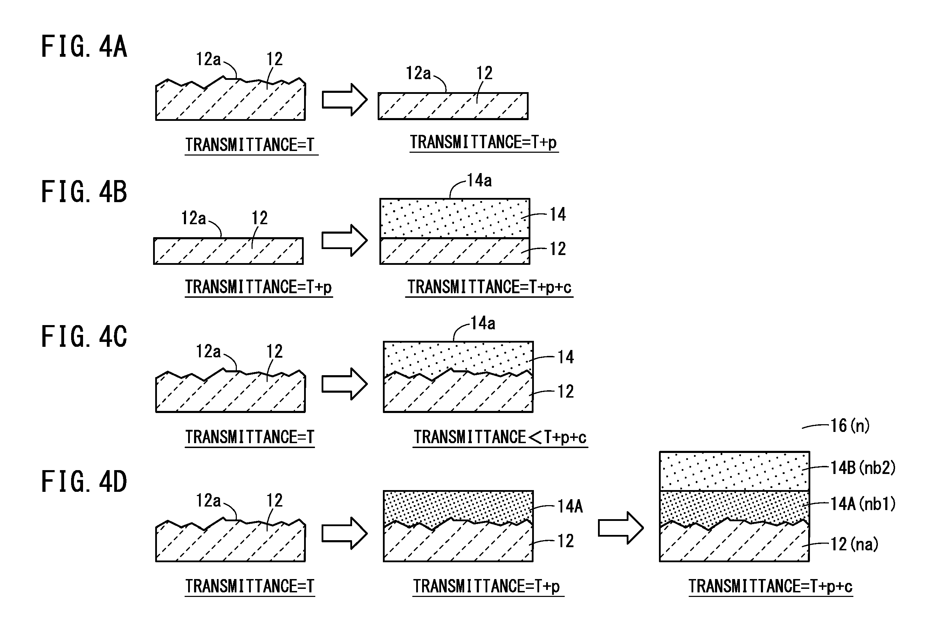

One, two, three, or more glass layers 14 may be formed. For example, an advantageous effect of the optical component having two glass layers will be described below with reference to FIGS. 4A to 4D.

In the left side of FIG. 4A, the surface 12a of the ceramic substrate 12 is an as-fired surface, and the transmittance of the ceramic substrate 12 is denoted by T. When the surface 12a of the ceramic substrate 12 is mirror-polished, the reflectance is reduced, so that the transmittance is improved. Thus, after the mirror-polishing, the ceramic substrate 12 has a transmittance of T+p. Then, as shown in FIG. 4B, when the glass layer 14 is formed on the mirror-polished surface 12a of the ceramic substrate 12, the reflection caused by refractive index difference at each boundary is reduced, whereby the transmittance is increased to T+p+c. Incidentally, the transmittances satisfy the relation of T < T+p < T+p+c.

As shown in FIG. 4C, when the glass layer 14 is formed on the as-fired surface 12a of the ceramic substrate 12, the transmittance becomes higher than T+c but lower than T+p+c. Thus, the transmittance increase by the glass layer 14 formed on the as-fired surface of the ceramic substrate 12 is larger than the transmittance increase by the glass layer 14 formed on the surface 12a of the ceramic substrate 12. However, in FIG. 4C, the transmittance increased by the glass layer 14 formed on the as-fired surface is lower than T+p+c due to the as-fired surface.

As shown in FIG. 4D, in an example of forming two glass layers 14 for the purpose of further improving the transmittance, a first glass layer 14A is formed on the as-fired surface 12a of the ceramic substrate 12. The first glass layer 14A is made of the same material as the ceramic substrate 12, or a different material having approximately the same refractive index as the material of the ceramic substrate 12. Then, a second glass layer 14B is formed on a surface of the first glass layer 14A. In this case, the second glass layer 14B is formed on the mirror surface of the first glass layer 14A, whereby the transmittance can be increased to T+p+c, equal to that of the structure of FIG. 4B. Furthermore, polishing processes are not carried out, so that the production cost can be lowered as compared with the structure of FIG. 4B.

When the refractive index na of the ceramic substrate 12, the refractive index nb1 of the first glass layer 14A, the refractive index nb2 of the second glass layer 14B, and the refractive index n of the air layer 16 satisfy the relation of na $\cong$ nb1 > nb2 > n, the reflectance can be reduced at the boundary with the air layer 16, so that the transmittance can be further improved. In the above, explanation has been given on the assumption that the transmittance of the glass layer 14 or the like formed on the ceramic substrate 12 is 100%. Even in a case where the transmittance of the glass layer 14 or the like is not 100%, the glass layer 14 or the like hardly affect the transmittance of the entire structure as long as the glass layer 14 has a small thickness.

Several specific examples of the optical component 10 according to this embodiment will be described below with reference to FIGS. 5A to 5D.

In an optical component according to a first specific example (hereinafter referred to as a first optical component 10A), the glass layer 14 is formed on the surface 12a of the ceramic substrate 12, and a dichroic film 20 is formed on the surface 14a of the glass layer 14.

The dichroic film 20 is a type of mirror capable of transmitting a light with a particular wavelength (such as an excitation light) and reflecting lights with different wavelengths (such as wavelength-converted lights and mixed color lights). In general, the dichroic film 20 is formed by thin film coating such as multi-layer coating of dielectric layers.

Thus, the dichroic film 20 has a structure provided by alternately stacking high refractive index layers and low refractive index layers. The material of the high refractive index layer may include $TiO_2$ (having a refractive index of 2.2 to 2.5), $Ta_2O_3$ (having a refractive index of 2.0 to 2.3), or the like. The material of the low refractive index layer may include $SiO_2$ (having a refractive index of 1.45 to 1.47), $MgF_2$ (having a refractive index of 1.38), or the like. In the dichroic film 20, the number of the high refractive index layers and the number of the low refractive index layers are each 5 to 100. Each layer has a thickness of 50 to 500 nm.

The ceramic substrate 12 preferably has a flat plate shape having the surface 12a and a back surface 12b opposite to the surface 12a. For example, the ceramic substrate 12 has a thickness of 0.01 to 5 mm and an area of about 0.1 mm $\times$ 0.1 mm or more (equivalent to a square). In the case of selecting a large area, the thickness is preferably increased accordingly in order to ensure sufficient strength.

The shape of the ceramic substrate 12 is not limited to the flat plate shape. The ceramic substrate 12 may have a three-dimensional shape on one main surface 12a, the other main surface 12b, or both thereof, for example. For example, the ceramic substrate 12 may have a curved surface shape (a concave-convex lens shape) or assembly of the shapes. The ceramic substrate 12 may have a cooling fin shape, a hole, or a protrusion for the purpose of heat release.

In the case of putting emphasis on the light transmittance, the front transmittance of the ceramic substrate 12 is preferably about 30% or more, more preferably about 70% or more. In the case of putting emphasis not on the light transmittance but on the light diffuseness, the front transmittance of the ceramic substrate 12 is preferably about 50% or more. The diffuseness is defined as follows:

$$\texttt{Diffuseness = 1 - Linear Transmittance/Front Transmittance.}$$

In the first optical component 10A, the dichroic film 20 is not formed directly on the ceramic substrate 12. The glass layer 14 is first formed on the ceramic substrate 12, for example, by the fusion method, and the dichroic film 20 is subsequently formed on the glass layer 14. Therefore, even when the one main surface 12a of the ceramic substrate 12 is an as-fired surface, the dichroic film 20 is formed on a surface (fused surface) of the glass layer 14, which has a surface roughness smaller than that of the as-fired surface. In the above experiment example, the surface 14a of the glass layer 14 is a mirror surface.

Thus, the dichroic film 20 can be formed on the surface (such as the mirror surface) having a surface roughness smaller than that of the as-fired surface of the ceramic substrate 12 without the processes of polishing the one main surface 12a of the ceramic substrate 12 to form the mirror surface. Similarly, an AR film 22 (see a second optical component 10B shown in FIG. 5B to be hereinafter described) can be formed over the ceramic substrate 12 in the same manner.

In general, in the case of performing the polishing process, a material such as an abrasive material may remain on the ceramic substrate 12, and such a residue material may cause generation of defect in the dichroic film 20 or the AR film 22 formed on the polished surface. In addition, disadvantageously, the polishing process contains a complicated operation to increase the production cost. In contrast, as described above, in this embodiment, the dichroic film 20 or the AR film 22 can be formed on the surface (such as the mirror surface) having a surface roughness smaller than that of the as-fired surface of the ceramic substrate 12 without the polishing processes. Therefore, the problems caused by the polishing process can be solved in the present invention.

Furthermore, since the refractive index na of the ceramic substrate 12, the refractive index nb of the glass layer 14, and the refractive index n of the air layer 16 satisfy the relation of na $\geq$ nb > n and preferably satisfy the relation of na > nb > n, the reflectance can be reduced at the boundary with the air layer 16 to improve the transmittance (such as the front transmittance).

In the case of putting emphasis on the transmittance, it is preferred that the glass layer 14 contain substantially no pores. This is because the pores may act to reduce the transmittance even when the glass layer 14 has a small thickness. In the case of putting emphasis on the diffuseness, it is preferred that the pores be appropriately utilized depending on balance with the transmittance.

The glass layer 14 is preferably colorless and transparent. The glass layer 14 may be colored as long as it has a high transmittance with respect to a wavelength of a light that is utilized in the optical component 10.

The refractive index of the glass layer 14 is preferably between those of the ceramic substrate 12 and air in order to reduce the reflection caused by the refractive index difference. Specifically, in a case where the ceramic substrate 12 is composed of $Al_2O_3$, the glass layer 14 preferably has a refractive index of 1.35 to 1.65. The refractive index of the glass layer 14 is preferably approximately equal to that of the ceramic substrate 12 in order to reduce the reflection caused by the surface shape.

The composition of the glass layer 14 is not particularly limited, and may contain $SiO_2$-$B_2O_3$, $SiO_2$-$BaO$-$B_2O_3$, $ZnO$-$B_2O_3$-$SiO_2$, or the like as a main component.

The softening temperature of the glass layer 14 is preferably 500°C or higher, more preferably 700°C or higher. Although a glass layer 14 having a lower softening point can be handled at a lower fusion temperature, such a glass layer 14 contains an alkali metal oxide or the like for lowering the fusion temperature and consequently is poor in a corrosion resistance, e.g. in a high-temperature high-humidity environment. In the case of forming the glass by the fusion method, the grain diameter of the glass powder used in the paste or the like is preferably about 0.5 to 5 $\mu m$.

The glass layer 14 preferably has a surface roughness Ra of 0.1 $\mu m$ or less. The glass layer 14 preferably has a mirror surface. The optical properties (such as a front transmittance) of the optical component can be improved by forming the dichroic film 20, the AR film 22, or the like on the mirror surface.

The ceramic substrate 12 may have a mirror-polished surface, an as-fired surface, a ground surface, or the like, and the surface roughness of the ceramic substrate 12 is not limited.

The dichroic film 20 may be formed on the surface of the glass layer 14 formed on the ceramic substrate 12. Alternatively, the dichroic film 20 may be formed on a surface of a glass layer formed on a light emitting layer such as a fluorescent layer as described later. Thus, the glass layer 14 can exhibit also an advantageous effect of modifying the surface shape of the light emitting layer.

An optical component according to a second specific example (hereinafter referred to as a second optical component 10B) will be described below with reference to FIG. 5B.

As shown in FIG. 5B, the second optical component 10B has a ceramic substrate 12, a first glass layer 14A formed on one main surface 12a of the ceramic substrate 12, and a dichroic film 20 formed on a surface 14Aa of the first glass layer 14A. The second optical component 10B further has a second glass layer 14B formed on another main surface 12b of the ceramic substrate 12, and an AR film 22 formed on a surface 14Ba of the second glass layer 14B.

Also in this case, without the polishing processes, the dichroic film 20 can be formed on the surface 14Aa (such as a mirror surface) of the first glass layer 14A, and the AR film 22 can be formed on the surface 14Ba (such as a mirror surface) of the second glass layer 14B. Therefore, a desired film such as the dichroic film 20 or the AR film 22 can be easily formed without cost increase, and thus the optical properties (such as the front transmittance) of the second optical component 10B can be improved.

In the second optical component 10B, it is preferred that the materials of the first glass layer 14A and the second glass layer 14B exhibit an excellent wettability on the material of the ceramic substrate 12 in the application process of the first and second glass layers 14A, 14B on the ceramic substrate 12.

An optical component according to a third specific example (hereinafter referred to as a third optical component 10C) will be described below with reference to FIG. 5C.

As shown in FIG. 5C, the third optical component 10C is approximately equal in structure to the first optical component 10A, but is different in that a fluorescent layer 24 is formed on the surface of the dichroic film 20. For example, the third optical component 10C acts as a wavelength converter for changing the wavelength of an excitation light 26 from a light-emitting diode or the like to obtain a light having a different color from the excitation light 26.

Thus, the excitation light 26 (such as a blue light) is diffused in the ceramic substrate 12, transmitted through the glass layer 14 and the dichroic film 20, introduced into the fluorescent layer 24, and converted to a light having a different wavelength (such as a yellow light 26a) in the fluorescent layer 24. A part of the yellow light 26a is transmitted toward the ceramic substrate 12, reflected by the dichroic film 20, and returned to the fluorescent layer 24. Therefore, the reflected and returned part contributes to increase in the yellow light amount, so that the brightness is improved as compared with a structure not having the dichroic film 20.

The fluorescent layer 24 contains a fluorescent material (i.e. fluorescent particles) and a binder of a glass. For example, the excitation light 26 may be an excitation light from a solid-state light source such as an LED or a laser diode (LD), a lamp such as a halogen lamp, etc.

For example, the ceramic substrate 12 is preferably an alumina substrate (a translucent alumina substrate) having a thermal conductivity of 30 W/m·K or more. When the thermal conductivity is 30 W/m·K or more, heat generated in the fluorescent layer 24 can be released through the ceramic substrate 12 to prevent thermal quenching. Of course, the ceramic substrate 12 may be a sapphire substrate, an aluminum nitride substrate, or the like, as long as it has a thermal conductivity of 30 W/m·K or more.

The ceramic substrate 12 may be formed by an arbitrary method such as a doctor blade method, an extrusion method, a gel casting method, a powder pressing method, or an imprint method without particular restrictions. In the case of forming the ceramic substrate 12 with a complicated shape, a thick shape, or a complicated thick shape, the gel casting method is particularly preferably used. In a preferred embodiment, a slurry containing a ceramic powder, a dispersion medium, and a gelling agent is cast into a mold, the slurry is turned into a gel to obtain a molded body, and the molded body is sintered to prepare the ceramic substrate 12 (see Japanese Laid-Open Patent Publication No. 2001-335371). In the case of forming the ceramic substrate 12 with a simple or thin shape, a tape formation method such as the doctor blade method is preferably used.

The material of the ceramic substrate 12 is particularly preferably a material provided by adding 150 to 1000 ppm of an auxiliary agent to a highly-pure alumina powder having a purity of 99.9% or more (preferably 99.95% or more). Examples of such highly-pure alumina powders include a highly-pure alumina powder available from Taimei Chemicals Co., Ltd.

The auxiliary agent is preferably magnesium oxide (MgO), and may further include zirconium oxide ($ZrO_2$), yttrium oxide ($Y_2O_3$), lanthanum oxide ($La_2O_3$), and scandium oxide ($Sc_2O_3$).

The gel casting methods include:

(1) a method containing the steps of dispersing a gelling agent of a prepolymer of a polyvinyl alcohol, an epoxy resin, a phenol resin, or the like, together with an inorganic powder and a dispersing agent, in a dispersion medium, to prepare a slurry, casting the slurry into a mold, using a cross-linker to three-dimensionally cross-link the gelling agent, thereby converting the slurry to a gel state, and solidifying the slurry; and
(2) a method containing the step of chemically bonding an organic dispersion medium having a reactive functional group to a gelling agent, thereby solidifying the slurry. The method of (2) is described in Japanese Laid-Open Patent Publication No. 2001-335371 filed by the present applicant.

The fluorescent layer 24 may be formed by a known method such as a screen printing method, a dip coating method, or an ink jet method, without particular restrictions.

Also in the third optical component 10C, the dichroic film 20 can be formed on the surface 14a of the glass layer 14 without the polishing processes. Therefore, the dichroic film 20 can be easily formed without cost increase, and thus the optical properties (such as the front transmittance) of the third optical component 10C can be improved.

An optical component according to a fourth specific example (hereinafter referred to as a fourth optical component 10D) will be described below with reference to FIG. 5D.

As shown in FIG. 5D, the fourth optical component 10D has a fluorescent layer 24 formed on one main surface 12a of a ceramic substrate 12, a glass layer 14 formed on one main surface 24a of the fluorescent layer 24, and a dichroic film 20 formed on a surface 14a of the glass layer 14.

The dichroic film 20 may be formed on the surface 14a of the glass layer 14 formed on the ceramic substrate 12 as in the first optical component 10A, and may be formed on the surface 14a of the glass layer 14 formed on the fluorescent layer 24 as in the fourth optical component 10D. By forming the glass layer 14 on the fluorescent layer 24, the surface shape of the fluorescent layer 24 can be modified, and the dichroic film 20 can exhibit a desired function.

For example, in the fourth optical component 10D, the fluorescent layer 24 is located on a side that is irradiated with the excitation light 26. For example, the excitation light 26 (such as the blue light) is transmitted through the dichroic film 20 and introduced into the fluorescent layer 24. A part of the excitation light 26 is converted to a light having a different wavelength (such as the yellow light 26a) in the fluorescent layer 24, and diffused in the ceramic substrate 12. Another part of the excitation light 26 is transmitted through the fluorescent layer 24 without conversion, and also diffused in the ceramic substrate 12. Therefore, the wavelength-converted yellow light 26a and the excitation light 26 is mixed in the ceramic substrate 12, so that a mixed color light 26b (such as a white light) is emitted from the other main surface 12b of the ceramic substrate 12 (light outlet surface). A part of the yellow light 26a is transmitted toward the light source, reflected by the dichroic film 20, and returned to the ceramic substrate 12. Therefore, the reflected and returned part contributes to increase in the white light amount, so that the brightness is improved.

Also, the glass layer 14 on the fluorescent layer 24 in the fourth optical component 10D has the following advantageous effects. That is, the glass layer 14 contributes to surface modification of the fluorescent layer 24 for forming the dichroic film 20. Further, in a case that the structure of the fluorescent layer 24 is comparatively porous, the glass layer 14 serves as a cap for preventing contamination of the fluorescent layer 24 from outside, infiltration of resin into the fluorescent layer 24 during the assembly process of the fourth optical component 10D, or the like.

From the viewpoint of improving the light diffusion, it is preferred that the surface 12a of the ceramic substrate 12 should not be an as-fired surface, but processed by printing, mechanical processing, etc. Several specific examples of the surface 12a will be described below with reference to FIGS. 6A to 6D.

As shown in FIG. 6A, an optical component according to a fifth specific example (hereinafter referred to as a fifth optical component 10E) is approximately equal in structure to the third optical component 10C, but is different in that the surface 12a of the ceramic substrate 12 has a lens shape. The ceramic substrate 12 with the surface 12a having the lens shape is referred to as a lens-shaped ceramic substrate 12L. In the example of FIG. 6A, in the surface 12a of the lens-shaped ceramic substrate 12L, a plurality of lenses 30 having an arc-like cross-section are continuously arranged without intervals.

When the excitation light 26 is introduced into the lens-shaped ceramic substrate 12L, the excitation light 26 is diffused in the lens-shaped ceramic substrate 12L, and is further diffused by the lenses 30 on the surface of the lens-shaped ceramic substrate 12L. The diffused excitation light 26 enters the fluorescent layer 24. Therefore, the light emission from the fluorescent layer 24 is made uniform, and the brightness is stabilized.

The surface may have a lens shape other than the above shape containing the continuously arranged lenses 30 having the arc-like cross-section. For example, as shown in FIG. 6B, the lens shape may be such that a plurality of the lenses 30 having the arc-like cross-section are arranged at intervals. Alternatively, as shown in FIG. 6C, the surface shape may be such that a plurality of protrusions 32 having a triangular cross-section are arranged. Alternatively, as shown in FIG. 6D, the surface shape may be such that a plurality of protrusions 32 having a rectangular cross-section are arranged.

In any of the above shapes, the height is about 10 to 1000 $\mu$m, and the pitch is about 0.1 to 3 mm.

The materials of the lens 30 and the protrusion 32 are not particularly limited, and may be the same as the material of the ceramic substrate 12. In a case where the materials of the lens 30 and the protrusion 32 are different from the materials of the ceramic substrate 12 and the glass layer 14, it is preferred that the ceramic substrate 12 have the highest heat resistance, the lens 30 and the protrusion 32 have an intermediate heat resistance, and the glass layer 14 have the lowest heat resistance (heat resistance of the ceramic substrate 12 > heat resistance of the lens 30 and the protrusion 32 > heat resistance of the glass layer 14). In that case, the previously-formed portion is not adversely affected by heat in the subsequently-formed portion in a heat treatment.

In conventional methods, when an optical film such as the dichroic film 20 or the AR film 22 is formed directly on the substrate having such lens 30 or protrusion 32 (such as the lens-shaped ceramic substrate 12L), the optical film often fails to have a desired shape and a desired function due to the concavo-convex surface shape. In this embodiment, the optical film is formed on the flat surface of the glass layer 14, and thus such problems are not caused. The lens 30, the protrusion 32, or the like for improving the diffuseness may be formed on the back surface of the ceramic substrate 12. In that case also, the same advantageous effects are achieved.

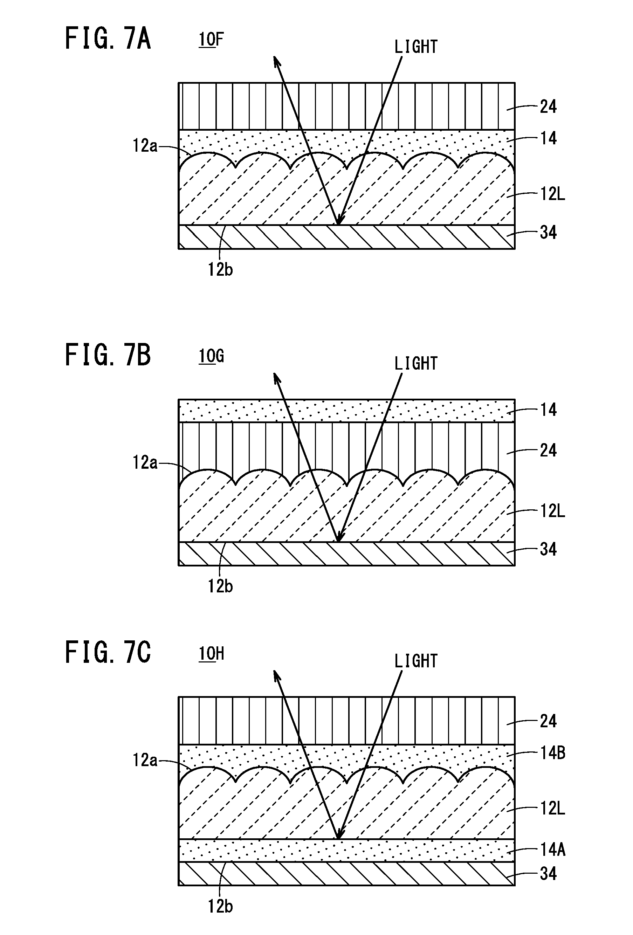

Several specific examples of optical components having a reflection film (optical components 10F to 10H according to sixth to eighth specific examples) will be described below with reference to FIGS. 7A to 7C. In the optical components 10F to 10H of the sixth to eighth specific examples, the lens-shaped ceramic substrate 12L is used as a reflection-type substrate.

As shown in FIG. 7A, in the optical component of the sixth specific example (hereinafter referred to as a sixth optical component 10F), a reflection film 34 is formed on the back surface 12b of the lens-shaped ceramic substrate 12L, and the fluorescent layer 24 is formed on the surface 12a of the lens-shaped ceramic substrate 12L with the glass layer 14 interposed therebetween.

As shown in FIG. 7B, in the optical component of the seventh specific example (hereinafter referred to as a seventh optical component 10G), the reflection film 34 is formed on the back surface 12b of the lens-shaped ceramic substrate 12L, and the glass layer 14 is formed on the surface 12a of the lens-shaped ceramic substrate 12L with the fluorescent layer 24 interposed therebetween.

As shown in FIG. 7C, the optical component of the eighth specific example (hereinafter referred to as an eighth optical component 10H) is approximately equal in structure to the sixth optical component 10F, but is different in that the reflection film 34 is formed on the back surface 12b of the lens-shaped ceramic substrate 12L with the first glass layer 14A interposed therebetween, and the fluorescent layer 24 is formed on the surface 12a of the lens-shaped ceramic substrate 12L with the second glass layer 14B interposed therebetween.

As shown in FIGS. 7A to 7C, in the sixth optical component 10F to the eighth optical component 10H, a light enters the optical component obliquely from above, reflected by the reflection film 34, and exits the optical component obliquely upward to the opposite side. In order to obtain a white light using a blue excitation light, for example, the blue excitation light and a yellow light generated in the fluorescent layer 24 may be mixed with each other.

In the sixth optical component 10F, the blue light is reflected at the boundaries between the fluorescent layer 24, the glass layer 14, the lens-shaped ceramic substrate 12L, and the reflection film 34. The yellow light is generated in the fluorescent layer 24, a part of the yellow light is directly emitted, and another part of the yellow light is reflected at the boundaries between the glass layer 14, the lens-shaped ceramic substrate 12L, and the reflection film 34. The lens-shaped ceramic substrate 12L, the reflection film 34, the glass layer 14, and the like are utilized to efficiently mix all the light components.

The materials of the layers other than the reflection film 34 may be selected in the above-described manner. The material of the reflection film 34 may include a metal such as Ag (silver), Cr (chromium), Cu (copper), W (tungsten), or Pt (platinum), and may be formed by a plating method, a physical vapor deposition method, etc.

The surface 12a of the lens-shaped ceramic substrate 12L having the reflection film 34 may be an as-fired surface, a mirror-polished surface, or a glass layer 14 surface. For the purpose of widely reflecting and diffusing the light, it is preferable to increase the surface roughness of the surface 12a (rough surface). For the purpose of forming a light path with high accuracy, it is preferable to lower the surface roughness of the surface 12a (smooth surface).

In the sixth optical component 10F, it is preferred that the sum of the refractive index difference between the glass layer 14 and the fluorescent layer 24 and the refractive index difference between the glass layer 14 and the lens-shaped ceramic substrate 12L should be minimized. In this case, the thickness of the fluorescent layer 24 can be easily controlled advantageously.

In the seventh optical component 10G, when the refractive index of the glass layer 14 is smaller than that of the fluorescent layer 24, the reflectance of the emission surface is smaller than a case in which the glass layer 14 is not provided. This is suitable for improving the brightness.

In the eighth optical component 10H, in order to make an underlayer for the reflection film 34 into a mirror surface at low cost, the first glass layer 14A is formed.

In the sixth optical component 10F to the eighth optical component 10H, the reflection film 34 may be formed on a side surface of the lens-shaped ceramic substrate 12L though not shown in the figures. In this case, when a part of the incident light reaches the side surface of the lens-shaped ceramic substrate 12L, the part can be guided to the reflection film 34 on the back surface 12b. Furthermore, when a part of the reflected light reaches the side surface of the lens-shaped ceramic substrate 12L, the part can be guided to the fluorescent layer 24. Consequently, the light intensity can be further increased.

[First Example]

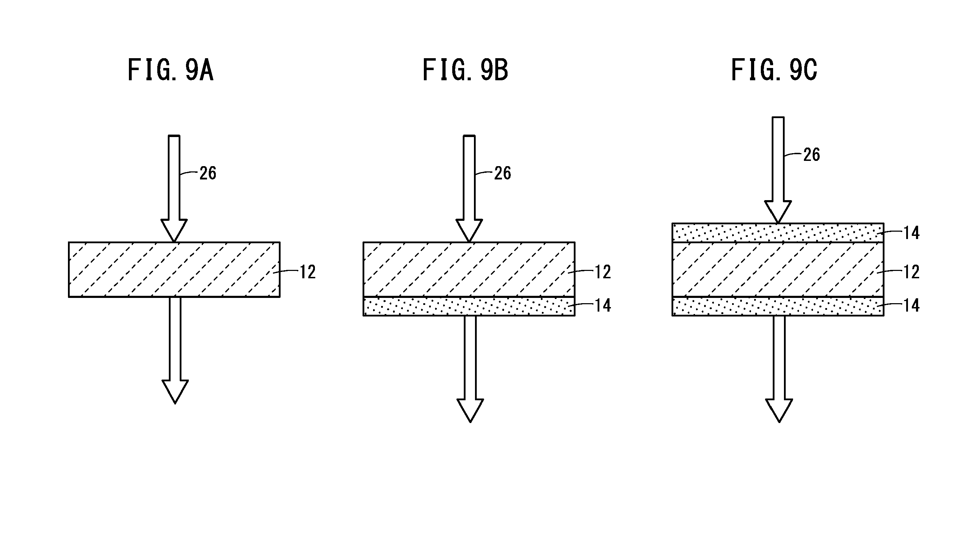

The surface roughnesses of Examples 1 to 4 and Comparative Example 1 were measured, and the transmittances thereof were evaluated. Examples 1 to 4 had a structure containing a translucent substrate and a glass layer formed thereon as shown in FIG. 1A or 9B. Comparative Example 1 had a structure containing the translucent substrate without the glass layer as shown in FIG. 9A.

<Surface Roughness Measurement>

In each of the samples (Examples 1 to 4 and Comparative Example 1), the surface roughness of the glass layer 14 was measured at 500-fold magnification using a laser microscope (VK-9700 manufactured by Keyence Corporation).

<Transmittance Evaluation>

The front transmittance was used for transmittance evaluation. Specifically, the transmittance at a measurement wavelength of 460 nm was used.

[Front Transmittance]

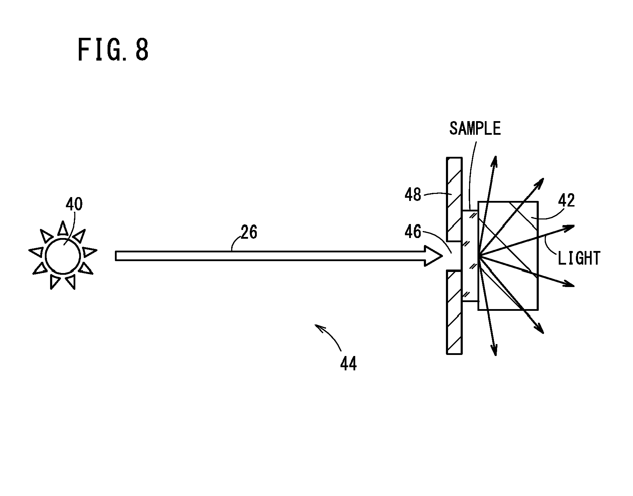

As shown in FIG. 8, the front transmittance was measured using a spectrophotometer 44 having a light source 40 and a detector 42 (U-4100 manufactured by Hitachi High-Technologies Corporation). A shield 48 having one through-hole 46 (having a diameter of 3 mm) was placed between the light source 40 and the detector 42. Each sample (Examples 1 to 4 and Comparative Example 1) was fixed to a surface of the shield 48 facing the detector 42 such that the through-hole 46 was closed. Incidentally, the translucent substrate side of the sample was fixed to the shield 48.

A light having a wavelength of 460 nm was emitted from the light source 40 toward the incidence surface (the translucent substrate side) of the sample fixed to the shield 48. The light that was transmitted through the sample and emitted from the emission surface (the glass layer) was detected by the detector 42.

The front transmittance was calculated as a ratio $I/I_0$ of the intensity (I) of the light transmitted through the sample to the light intensity ($I_0$) measured without the sample.

(Example 1)

A translucent alumina substrate having a purity of 99.98%, an average crystal grain diameter of 25 $\mu$m, an outer size of 30 × 30 mm, and a thickness of 0.5 mm was formed by a gel casting method described in Japanese Laid-Open Patent Publication No. 2001-335371.

A paste containing a glass was printed on the translucent alumina substrate by a screen printing method. The glass contained $SiO_2$-$B_2O_3$ as the main component. The glass paste was printed into a pattern having an outer size of 28 × 28 mm and a thickness of 0.02 mm. The resultant was dried at 60°C to 100°C and fired at 900°C for 10 minutes, whereby the glass layer was formed on the surface of the translucent alumina substrate so that the sample (optical component) of Example 1 was obtained.

(Example 2)

Example 2 was produced in the same manner as Example 1 except for using a glass containing $SiO_2$-BaO-$B_2O_3$ as the main component.

(Example 3)

Example 3 was produced in the same manner as Example 1 except for using a glass containing ZnO-$B_2O_3$-$SiO_2$ as the main component and a firing temperature of 700°C.

(Example 4)

Example 4 was produced in the same manner as Example 3 except for using a firing temperature of 900°C.

(Comparative Example 1)

The translucent alumina substrate was prepared in the same manner as Example 1 and used as the measurement sample of Comparative Example 1. Thus, the glass layer was not formed on the surface of the translucent alumina substrate.

The evaluation results of Examples 1 to 4 and Comparative Example 1 are shown in Table 1. The evaluation criteria were as follows.

A: The sample had a surface roughness of 0.1 $\mu$m or less and a transmittance of 74% or more.
B: The sample had a surface roughness of 0.1 $\mu$m or less and a transmittance of 66% or more but less than 74%.
C: The sample had a surface roughness of 0.1 $\mu$m or less and a transmittance of less than 66%.
D: The sample had a surface roughness of more than 0.1 $\mu$m.

Table 1

|  | Type of Glass | Main firing | Transmittance at 460 nm (%) | Surface roughness Ra ($\mu$m) | Evaluation |
|---|---|---|---|---|---|
| Ex. 1 | $SiO_2$-$B_2O_3$ | 900°C × 10 min | 76 | 0.05 | A |
| Ex. 2 | $SiO_2$-BaO-$B_2O_3$ | 900°C × 10 min | 74 | 0.05 | A |
| Ex. 3 | ZnO-$B_2O_3$-$SiO_2$ | 700°C × 10 min | 73 | 0.05 | B |
| Ex. 4 | ZnO-$B_2O_3$-$SiO_2$ | 900°C × 10 min | 63 | 0.05 | C |
| Comp. Ex. 1 | Not used | Not performed | 73 | 0.2 | D |

As shown in Table 1, in Examples 1 to 4, all the samples had the surface roughness Ra of 0.05 $\mu$m, and thus the emission surfaces of the optical components were mirror surfaces. As is clear from the evaluation results of Examples 1 to 4, the transmittance depended on the type of glass and the firing temperature. In Comparative Example 1, since the glass layer was not formed, the sample had the surface roughness of 0.2 μm, i.e., the as-fired surface, and was evaluated as D.

[Second Example]

Transmittance changes with light wavelengths were observed in Examples 5 and 6 and Comparative Example 2.

(Example 5)

As shown in FIG. 9B, the glass layer 14 was formed only on the emission surface of the translucent substrate 12 (the translucent alumina substrate) in the same manner as Example 1 in First Example using the same materials.

(Example 6)

As shown in FIG. 9C, the glass layer 14 was formed on each of the emission surface and the incidence surface of the translucent substrate 12.

(Comparative Example 2)

As shown in FIG. 9A, the glass layer 14 was not formed on the emission surface or the incidence surface of the translucent substrate 12 in the same manner as Comparative Example 1 in First Example. The emission surface and the incidence surface were as-fired surfaces.

<Evaluation>

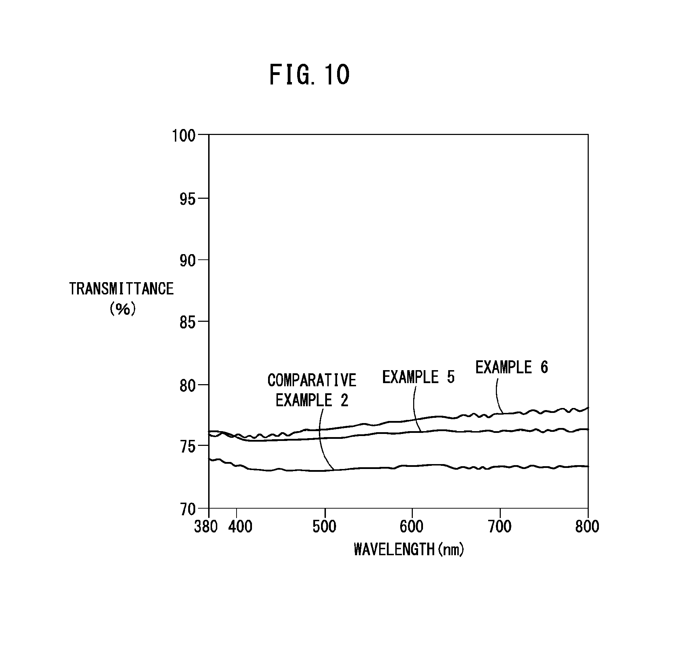

The front transmittances of Examples 5 and 6 and Comparative Example 2 were evaluated in the same manner as First Example. In Second Example, the front transmittance evaluation was performed by use of excitation light 26 of wavelength ranging from 380 to 780 nm. The evaluation results are shown in FIG. 10.

As shown in FIG. 10, as is clear from the results of Comparative Example 2 and Example 5, in the first wavelength region (500 to 780 nm), the transmittance was increased by about 3% by forming the glass layer 14 on the emission surface of the translucent substrate 12. Furthermore, in Example 6, by forming the glass layer 14 on each of the emission surface and the incidence surface, the transmittance was slightly increased in the short wavelength region (around 500 nm) and further increased in the long wavelength region.

The results of Examples 5 and 6 were not so different from each other in the second wavelength region (380 to 460 nm). More specifically, the transmittance was increased by about 3% as compared with Comparative Example 2.

An optical component (10) contains a translucent substrate (12) and a glass layer (14) disposed in contact with the translucent substrate (12). The glass layer (14) has a refractive index equal to or less than that of the translucent substrate (12).

**Claims**

1. An optical component comprising a translucent substrate (12) and a glass layer (14), wherein the glass layer (14) is disposed in contact with the translucent substrate (12), and has a refractive index equal to or less than that of the translucent substrate (12).

2. The optical component according to claim 1, wherein the glass layer (14) has a surface roughness smaller than that of the translucent substrate (12).

3. The optical component according to claim 1 or 2, wherein the translucent substrate (12) contains alumina as a main component.

4. The optical component according to any one of claims 1 to 3, wherein the translucent substrate (12) has a thickness of 5 mm or less, and the glass layer (14) has a thickness of 0.1 mm or less.

5. The optical component according to any one of claims 1 to 4, further comprising a dichroic film (20) formed on the glass layer (14).

6. The optical component according to any one of claims 1 to 4, further comprising an antireflection film (22) formed on the glass layer (14).

7. The optical component according to any one of claims 1 to 4, wherein
the glass layer (14) is formed on each of both surfaces (12a, 12b) of the translucent substrate (12).

8. The optical component according to claim 1 or 2, wherein
the translucent substrate (12) contains a fluorescent layer (24).

9. The optical component according to claim 8, wherein
the glass layer (14) is formed on the fluorescent layer (24).

10. The optical component according to claim 1 or 2, wherein
the translucent substrate (12) has a lens shape on a surface (12a) thereof.

11. The optical component according to claim 1, 2, or 10, further comprising a reflection film (34) formed on a back surface (12b) of the translucent substrate (12).

12. The optical component according to claim 1, 2, or 10, further comprising a reflection film (34) formed on a back surface (12b) of the translucent substrate (12), the glass layer (14) being interposed between the reflection film (34) and the translucent substrate (12).

# FIG. 1A

10

16 (n)

14 (nb)

12 (na)

# FIG. 1B

14a    12a

14

12

FIG. 2A

FIG. 2B

FIG. 2C

# FIG. 3A

# FIG. 3B

# FIG. 3C

FIG. 4A

12a  12

TRANSMITTANCE=T

12a  12

TRANSMITTANCE=T+p

FIG. 4B

12a  12

TRANSMITTANCE=T+p

14a
14
12

TRANSMITTANCE=T+p+c

FIG. 4C

12a  12

TRANSMITTANCE=T

14a
14
12

TRANSMITTANCE<T+p+c

FIG. 4D

12a  12

TRANSMITTANCE=T

14A
12

TRANSMITTANCE=T+p

16 (n)
14B (nb2)
14A (nb1)
12 (na)

TRANSMITTANCE=T+p+c

FIG. 5A

FIG. 5B

FIG. 5C

FIG. 5D

FIG. 6A

10E               14a

— 24

— 20

12a —

— 14

— 30

— 12L

— 26

FIG. 6B

14a

— 20

12a —

— 14

— 30

— 12L

FIG. 6C

14a

— 20

12a —

— 14

— 32

— 12L

FIG. 6D

14a

— 20

12a —

— 14

— 32

— 12L

EP 2 998 768 A1

FIG. 7A

FIG. 7B

FIG. 7C

FIG. 8

SAMPLE

40

26

48

46

42

LIGHT

44

FIG. 9A

FIG. 9B

FIG. 9C

FIG. 10

Europäisches
Patentamt

European
Patent Office

Office européen
des brevets

# EUROPEAN SEARCH REPORT

Application Number

EP 15 18 5846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 860 919 A1 (MITSUBISHI CHEM CORP [JP]) 28 November 2007 (2007-11-28) | 1,6,8 | INV. G02B5/02 |
| A | * paragraphs [0022], [0030], [0053] - [0058], [0078] - [0079]; figure 1 * | 2-5,7, 9-12 | |
| X | EP 2 390 240 A1 (ASAHI GLASS CO LTD [JP]) 30 November 2011 (2011-11-30) * paragraphs [0038], [0043]; figure 4 * | 1,4 | |
| X | US 2014/191223 A1 (WADA NAOYA [JP] ET AL) 10 July 2014 (2014-07-10) * paragraph [0031] - paragraph [0035]; figure 1 * | 1 | |

TECHNICAL FIELDS
SEARCHED      (IPC)

G02B

The present search report has been drawn up for all claims

| Place of search | Date of completion of the search | Examiner |
|---|---|---|
| Berlin | 12 January 2016 | Andreassen, Jon |

EPO FORM 1503 03.82 (P04C01)

## ANNEX TO THE EUROPEAN SEARCH REPORT
## ON EUROPEAN PATENT APPLICATION NO.

EP 15 18 5846

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2016

| Patent document cited in search report | | Publication date | Patent family member(s) | | Publication date |
|---|---|---|---|---|---|
| EP 1860919 | A1 | 28-11-2007 | EP | 1860919 A1 | 28-11-2007 |
| | | | TW | I389597 B | 11-03-2013 |
| | | | US | 2009072733 A1 | 19-03-2009 |
| | | | WO | 2006095632 A1 | 14-09-2006 |
| EP 2390240 | A1 | 30-11-2011 | CN | 102292302 A | 21-12-2011 |
| | | | EP | 2390240 A1 | 30-11-2011 |
| | | | JP | 5541165 B2 | 09-07-2014 |
| | | | KR | 20110108373 A | 05-10-2011 |
| | | | TW | 201107261 A | 01-03-2011 |
| | | | US | 2011278635 A1 | 17-11-2011 |
| | | | WO | 2010084924 A1 | 29-07-2010 |
| US 2014191223 | A1 | 10-07-2014 | CN | 103874666 A | 18-06-2014 |
| | | | EP | 2767518 A1 | 20-08-2014 |
| | | | JP | WO2013054820 A1 | 30-03-2015 |
| | | | TW | 201321329 A | 01-06-2013 |
| | | | US | 2014191223 A1 | 10-07-2014 |
| | | | WO | 2013054820 A1 | 18-04-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10311907 A
- JP 2006312579 A

- JP 2001335371 A